# EUROPEAN PATENT APPLICATION

(11) **EP 3 025 819 A1**
(43) Date of publication of application: **01.06.2016**
(21) Application number: 14839926.4
(22) Date of filing: 26.02.2014
(51) Int. Cl.: B23K 26/064, B23K 26/00, B23K 26/046, B23K 26/08

(54) **LASER MACHINING DEVICE**

(30) Priority: 28.08.2013 JP 2013177395
(71) Applicant: Mitsubishi Heavy Industries, Ltd., Tokyo 108-8215 (JP)
(72) Inventor: NARITA, Ryuichi, Tokyo 108-8215 (JP); GOYA, Saneyuki, Tokyo 108-8215 (JP); MUTA, Kenji, Tokyo 108-8215 (JP); WATANABE, Toshiya, Tokyo 108-8215 (JP); WATANABE, Masao, Tokyo 108-8215 (JP)
(74) Representative: Hoffmann Eitle
(86) International application number: PCT/JP2014/054735
(87) International publication number: WO 2015/029466

(57) **Abstract**

In order to simplify a configuration even if laser beams of different wavelength bands are used, a laser output device, which oscillates laser beams (L1 and L2) of plural wavelength bands, and an irradiation head (16), which performs irradiation by condensing the laser beams (L1 and L2) of the respective wavelength bands with focal distances thereof being shifted from each other on the same optical axis S, are included.

## Description

### Field

The present invention relates to a laser processing apparatus that processes a workpiece by irradiating the workpiece with laser.

### Background

When processing is performed by laser irradiation, for drilling, cutting, or soldering workpieces, in order to ensure the processing performance and processing quality, laser is preferably condensed to smaller spots to increase the power density. Further, absorption thereof into metals, the workpieces, is preferably increased to reduce the reflection.

Conventionally, processing by use of a long wavelength laser beam that is able to be condensed to a smaller spot with a high density and a short wavelength laser beam having high absorbency into metals has been described in, for example, Patent Literature 1 to Patent Literature 3.

### Citation List

### Patent Literature

Patent Literature 1: Japanese Laid-open Patent Publication No. 63-295093
Patent Literature 2: Japanese Laid-open Patent Publication No. 2001-196665
Patent Literature 3: Japanese Laid-open Patent Publication No. 2006-263771

### Summary

### Technical Problem

In laser processing apparatuses described in the above mentioned Patent Literature 1 to Patent Literature 3, laser beams of different wavelength bands are respectively generated by different oscillation sources. Thus, there is concern over increase in size of these apparatuses. In particular, in Patent Literature 1, since a workpiece is irradiated with laser beams of different wavelength bands separately, separate optical systems, processing heads, moving mechanisms, and the like are required, the number of parts is increased, the configuration of the apparatus becomes complicated, and the size of the apparatus is increased. Further, in Patent Literature 2 and Patent Literature 3, since laser beams of different wavelength bands are superimposed and condensed on the same optical axis, their optical systems for the superimposition become complicated.

The present invention solves the above described problems, and an object thereof is to provide a laser processing apparatus that enables simplification of its configuration even if laser beams of different wavelength bands are used.

### Solution to Problem

According to as aspect of the present invention, a laser processing apparatus comprises: a laser output device that oscillates laser beams having plural wavelength bands; and an irradiation head that is configured to irradiate the laser beams of the respective wavelength bands to condense at focal distances being shifted from each other on the same optical axis.

By including the laser output device that oscillates laser beams having plural wavelength bands, the laser processing apparatus is able to oscillate laser beams of plural wavelength bands without increase in size of the apparatus. Moreover, by the inclusion of the irradiation head that performs irradiation by condensing the laser beams of the respective wavelength bands with their focal distances shifted from each other on the same optical axis, the wavelength band with which processing is performed and the wavelength band with which the processing is assisted are able to be emitted on the same optical axis and the processing and the processing assistance are able to be performed simultaneously in the series of processing operations. As a result, the configuration is able to be simplified even if laser beams of different wavelength bands are used.

Advantageously, in the laser processing apparatus, the irradiation head positions a focal position of a laser beam having a long wavelength at a position to be processed, and condenses a laser beam having a short wavelength with a focal point of the laser beam having the long wavelength being placed in the center.

By positioning the focal point of the long wavelength laser beam that is able to be condensed at high density at the position to be processed and condensing the short wavelength laser beam having high absorbency with the focal point of the long wavelength laser beam being placed in the center, this laser processing apparatus preheats the workpiece with the peripheral short wavelength laser beam and processes the preheated workpiece with the long wavelength laser beam. As a result, by performing the preheating along with the processing, the processing speed and the processing quality are able to be improved.

Advantageously, in the laser processing apparatus, the irradiation head positions a focal position of a laser beam having a short wavelength at a position to be processed, and condenses a laser beam having a long wavelength with a focal point of the laser beam having the short wavelength being placed in the center.

By arranging the focal point of the short wavelength laser beam in the condensation of the long wavelength laser beam with the comparatively high power density, this laser processing apparatus is able to improve the processing quality, because while the workpiece is processed by being melted by the short wavelength laser beam, the temperature of the metal melted by radiation from plasma generated due to the melting of the workpiece is increased by the long wavelength laser beam and the viscosity thereof is decreased.

Advantageously, the laser processing apparatus further comprises a focal distance adjusting device including a concave glass and a convex glass that are each configured to be movable in an optical axis direction.

By the focal distance adjusting device changing the focal distances of the respective laser beams of different wavelength bands, this laser processing apparatus is able to easily perform positioning of the focal point to the position to be processed.

Advantageously, the laser processing apparatus further comprises: a moving mechanism that relatively moves a supporting table, which supports a workpiece, and the irradiation head; and a control device that adjusts the relative movement between the supporting table and the irradiation head by the moving mechanism, and various conditions of the laser beams output from the laser output device.

By adjusting the relative movement of the supporting table and the irradiation head by the moving mechanism and the various conditions of the laser beams output from the laser output device, even if laser beams of different wavelength bands are used, this laser processing apparatus is able to perform processing of a workpiece with laser while enabling its configuration to be simplified.

### Advantageous Effects of Invention

According to the present invention, even if laser beams of different wavelength bands are used, the configuration is able to be simplified.

### Brief Description of Drawings

FIG. 1 is a schematic configuration diagram schematically illustrating a laser processing apparatus according to an embodiment of the present invention.
FIG. 2 is a schematic configuration diagram schematically illustrating an irradiation head of a laser processing apparatus according to a first embodiment of the present invention.
FIG. 3 is an enlarged plan view of laser emitted from the irradiation head illustrated in FIG. 2 to a workpiece, the laser as viewed in an optical axis direction.
FIG. 4 is a diagram illustrating relations between wavelength of laser and absorptances of workpieces.
FIG. 5 is a schematic configuration diagram schematically illustrating another irradiation head of the laser processing apparatus according to the first embodiment of the present invention.
FIG. 6 is a schematic configuration diagram schematically illustrating an irradiation head of a laser processing apparatus according to a second embodiment of the present invention.
FIG. 7 is an enlarged plan view of laser emitted from the irradiation head illustrated in FIG. 6 to a workpiece, the laser as viewed in an optical axis direction. Description of Embodiments

Hereinafter, an embodiment of a laser processing apparatus according to the present invention will be described in detail, based on the drawings. The present invention is not limited by this embodiment. For example, in this embodiment, a case where a plate like workpiece is processed will be described, but the shape of the workpiece is not particularly limited. The shape of the workpiece may be any of various shapes. Further, in this embodiment, a case where a hole is formed in a workpiece, a case where a workpiece is cut along a straight line, or a case where a workpiece is welded, will be described, but by adjusting a position to be processed on the workpiece, that is, a position to be irradiated with laser, a shape other than a hole or a straight line, for example, a shape having a bending point or a curved shape, may be applicable. Furthermore, in this embodiment, laser and a workpiece are relatively moved by the workpiece being moved, but the laser may be moved, or both the laser and the workpiece may be moved.

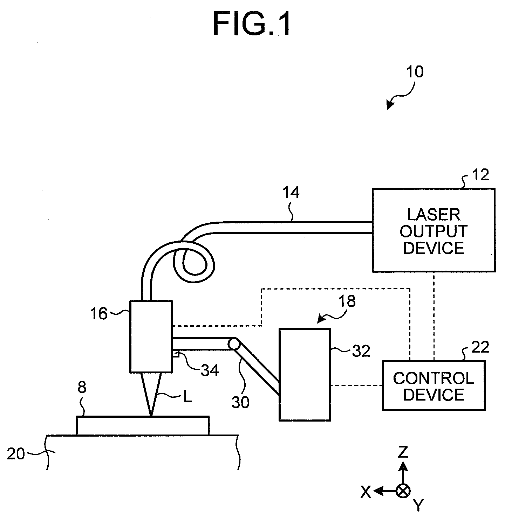

FIG. 1 is a schematic configuration diagram schematically illustrating the laser processing apparatus according to this embodiment. A laser processing apparatus 10 has, as illustrated in FIG. 1, a laser output device 12, a guiding optical system 14, an irradiation head 16, a moving mechanism 18, a supporting table 20, and a control device 22. By irradiating a workpiece 8 arranged on the supporting table 20 with laser L, the laser processing apparatus 10 processes the workpiece 8. In this embodiment, with respect to the laser processing apparatus 10, a surface of the workpiece 8 will be referred to as "XY plane", and a direction orthogonal to the surface of the workpiece 8 will be referred to as "Z direction".

The workpiece 8 of this embodiment is a plate like member. As the workpiece 8, a member made of any of various materials, such as, for example, Inconel, Hastelloy, stainless steel, ceramic, steel, carbon steel, ceramics, silicon, titanium, tungsten, resin, plastics, and glass, may be used. Moreover, as the workpiece 8, a member made of any of: fiber reinforced plastics, such as carbon fiber reinforced plastics (CFRP), glass fiber reinforced plastics (GFRP), or glass mat thermoplastics (GMT); various metals, such as, ferroalloys other than steel plates, or aluminum alloys; other composite materials; and the like may be also used. In addition, if welding is performed, a mechanism for supplying a filler material, powder, and the like may be included.

The laser output device 12 is a device that outputs laser. The laser output device 12 oscillates laser beams having plural wavelength bands. This laser output device 12 is, for example, a semiconductor laser oscillator.

The guiding optical system 14 is an optical system that guides the laser output from the laser output device 12 to the irradiation head 16. The guiding optical system 14 of this embodiment is an optical fiber. One end portion of the guiding optical system 14 is connected to a laser output port of the laser output device 12 and the other end portion thereof is connected to the irradiation head 16. The guiding optical system 14 outputs the laser output from the laser output device 12 towards an incoming end of the irradiation head 16. The configuration of the guiding optical system 14 is not limited to this. The laser processing apparatus 10 may guide the laser to the irradiation head 16 through reflection, condensation, and the like of the laser by use of a combination of mirrors and lenses as the guiding optical system 14. Or, the laser may be directly guided from the laser output device 12 to the irradiation head 16.

The irradiation head 16 irradiates the workpiece 8 with the laser L output from the guiding optical system 14. Details of the irradiation head 16 will be described later.

The moving mechanism 18 has an arm 30, and a driving source 32 that moves the arm 30. A distal end of the arm 30 supports the irradiation head 16. The driving source 32 is able to move the arm 30 in three XYZ axial directions. The moving mechanism 18 is able to irradiate various positions on the workpiece 8 with the laser L from the irradiation head 16, by causing the driving source 32 to move the arm 30 in the XYZ directions. Further, the moving mechanism 18 has a position detector 34 that detects positions of the irradiation head 16 in the XYZ directions. In this embodiment, the moving mechanism 18 is a mechanism that causes the arm 30 and the driving source 32 to move the irradiation head 16, but a mechanism that causes an XY stage, an XYZ stage, or the like to move the irradiation head 16 may also be used.

The supporting table 20 supports the workpiece 8 at a predetermined position. In the laser processing apparatus 10, the supporting table 20 may be formed as the XY stage that moves the workpiece 8 in the XY directions.

The control device 22 controls operation of each unit. The control device 22 adjusts various conditions of the laser output from the laser output device 12 and adjusts a position of the irradiation head 16 relative to the workpiece 8 by causing the moving mechanism 18 to move the irradiation head 16.

This laser processing apparatus 10 causes the laser to be output from the laser output device 12. In the laser processing apparatus 10, the guiding optical system 14 guides the output laser L to the irradiation head 16. In the laser processing apparatus 10, the moving mechanism 18 moves the irradiation head 16, while the position detector 34 detects the positions of the irradiation head 16 in the XYZ directions. Thereby, the laser processing apparatus 10 is able to process the workpiece 8.

### [First Embodiment]

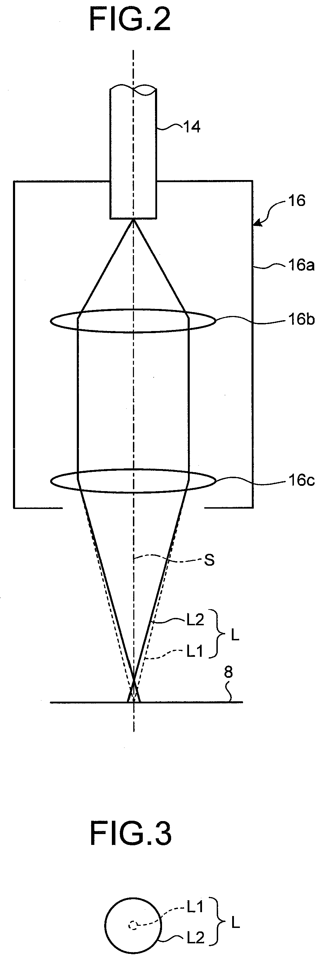

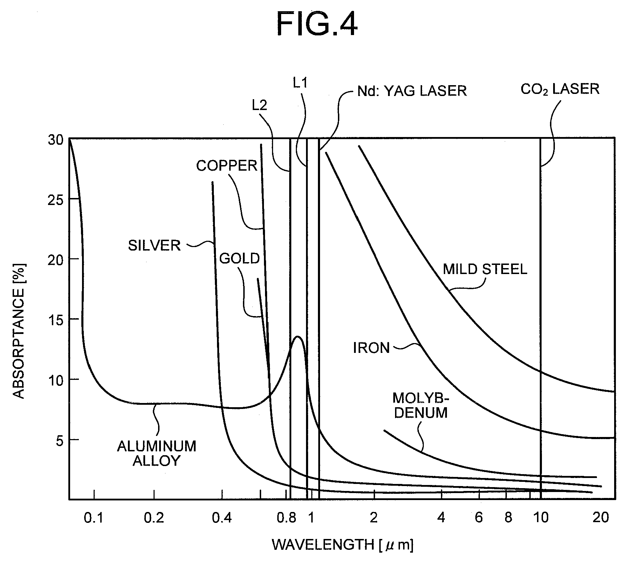

FIG. 2 is a schematic configuration diagram schematically illustrating an irradiation head of a laser processing apparatus according to this embodiment, FIG. 3 is an enlarged plan view of laser emitted from the irradiation head illustrated in FIG. 2 to a workpiece, the laser as viewed in an optical axis direction (a direction along a direction in which the optical axis extends), and FIG. 4 is a diagram illustrating relations between wavelength of laser and absorptances of workpieces.

As illustrated in FIG. 2, the irradiation head 16 has, inside a casing 16a supported by the above described moving mechanism 18, a parallel optical system 16b that turns laser incoming from the guiding optical system 14 into parallel light, and a condensing optical system 16c that condenses the laser that has been turned into the parallel light by the parallel optical system 16b on an optical axis S, provided therein. The parallel optical system 16b and the condensing optical system 16c illustrated in FIG. 2 are schematically illustrated, and are not limited to this lens configuration.

In this irradiation head 16, the workpiece 8 is irradiated with the condensed laser L. In this embodiment, the laser output device 12 oscillates laser beams having plural (two in FIG. 2) wavelength bands. In the irradiation head 16, these laser beams are turned into parallel light by the parallel optical system 16b and condensed by the condensing optical system 16c, and laser beams L1 and L2 of the respective wavelength bands are condensed and emitted with their focal distances shifted from each other on the same optical axis S. In this embodiment, as illustrated in FIG. 2 and FIG. 3, a focal position of the laser beam L1 having a long wavelength is positioned at a position to be processed on the workpiece 8 (the surface of the workpiece 8), and the laser beam L2 having a short wavelength is condensed, with a focal point of the laser beam L1 of the long wavelength being placed in the center. That is, the focal point of the laser beam L1 of the long wavelength is positioned at the position to be processed on the workpiece 8, and the laser beam L2 of the short wavelength is condensed so as to surround the laser beam L1 with this focal point of the laser beam L1 of the long wavelength in the center.

The laser beam L1 of the long wavelength is able to be condensed at high density to a small spot, and the laser beam L2 of the short wavelength has high absorbency into the workpiece 8. Thus, the workpiece 8 is preheated by the peripheral laser beam L2 of the short wavelength, and the workpiece 8 that has been preheated is processed by the inner laser beam L1 of the long wavelength. Therefore, by performing the preheating along with the processing, the processing speed and the processing quality are able to be improved.

For example, the semiconductor laser of this embodiment has wavelength bands of 808 nm and 940 nm. Further, if the workpiece 8 is aluminum alloy, an absorptance of this aluminum alloy for the laser wavelength is, as illustrated in FIG. 4, near 900 nm. In this embodiment, the wavelength band of 808 nm with a high absorptance is of the laser beam L2 of the short wavelength, and the wavelength band of 940 nm is of the laser beam L1 of the long wavelength. As described above, the plural wavelength bands approximate to the absorption wavelength of the workpiece 8 is used, the short wavelength one with the higher absorptance is condensed to the periphery, and the focal point of the long wavelength one that is able to be condensed at high density is positioned at the position to be processed on the workpiece 8, with that focal point in the center. Thereby, preheating and processing are able to be performed, and the processing speed and the processing quality for the aluminum alloy are able to be improved. The CO₂ laser generally used in laser processing has a wavelength of 106 µm, neodymium: YAG laser (Nd :YAG laser) has a wavelength of 10.6 µm, and as compared to the semiconductor laser, these wavelengths are away from the absorption wavelength 900 nm of the aluminum alloy. Therefore, even if different wavelength bands are used for the CO₂ laser and the Nd: YAG laser, the processing speed and the processing quality of the aluminum alloy by the semiconductor laser are difficult to be reproduced.

As described above, the laser processing apparatus 10 of this embodiment includes the laser output device 12 that oscillates the laser beams having the plural wavelength bands, and the irradiation head 16 that performs irradiation by condensing the laser beams of the respective wavelength bands with their focal distances shifted from each other on the same optical axis.

By including the laser output device 12 that oscillates the laser beams having the plural wavelength bands, this laser processing apparatus 10 is able to oscillate laser beams of plural wavelength bands without increase in size of the apparatus. What is more, by the inclusion of the irradiation head 16 that performs irradiation by condensing the laser beams of the respective wavelength bands with their focal distances shifted from each other on the same optical axis S, the wavelength band with which processing is performed and the wavelength band with which the processing is assisted are able to be emitted on the same optical axis S and the processing and the processing assistance are able to be performed simultaneously in the series of processing operations. As a result, the configuration is able to be simplified even if laser beams of different wavelength bands are used.

Further, preferably in the laser processing apparatus 10 of this embodiment, the irradiation head 16 positions the focal position of the laser beam L1 having the long wavelength at the position to be processed, and condenses the laser beam L2 having the short wavelength with the focal point of the laser beam L1 of the long wavelength being placed in the center.

By positioning the focal point of the laser beam L1 of the long wavelength that is able to be condensed at high density at the position to be processed on the workpiece 8 and condensing the laser beam L2 of the short wavelength having the high absorptance with the focal point of the laser beam L1 of the long wavelength being placed in the center, this laser processing apparatus 10 preheats the workpiece 8 with the peripheral laser beam L2 of the short wavelength and processes the preheated workpiece 8 with the laser beam L1 of the long wavelength. As a result, by performing the preheating along with the processing, the processing speed and the processing quality are able to be improved.

In the laser processing apparatus 10 of this embodiment, the irradiation head 16 is moved by the moving mechanism 18 while the positions of the irradiation head 16 in the XYZ directions are detected by the position detector 34. Further, the focal position of the laser beam L1 of the long wavelength and the focal distance of the laser beam L2 of the short wavelength are determined by the parallel optical system 16b and the condensing optical system 16c, and this information of the focal distances are stored in the control device 22 in advance. Therefore, by the control device 22 moving the moving mechanism 18 to position the focal point of the laser L (the laser beam L1 of the long wavelength in this embodiment) at the position to be processed on the workpiece 8, the positioning of the focal point at the position to be processed on the workpiece 8 is able to be performed easily.

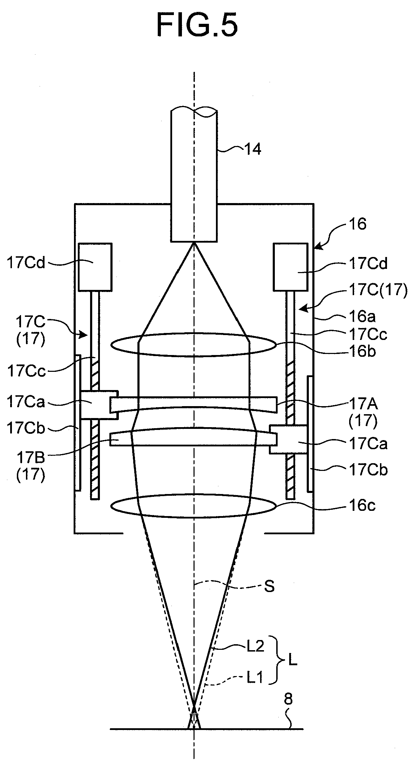

FIG. 5 is a schematic configuration diagram schematically illustrating another irradiation head of the laser processing apparatus according to this embodiment. The irradiation head 16 illustrated in FIG. 5 has a focal distance adjusting device 17. The focal distance adjusting device 17 has, for example, a concave glass 17A and a convex glass 17B, and a glass moving mechanism 17C that respectively enables movement of these concave glass 17A and convex glass 17B in the optical axis direction. The glass moving mechanism 17C includes, for example: supporting members 17Ca that respectively support the concave glass 17A and the convex glass 17B; guiding rails 17Cb that are provided to extend in the optical axis direction and guide the respective supporting members 17Ca to move them in the optical axis direction; screw rods 17Cc that are provided to extend in the optical axis direction and are screwed and inserted into the respective supporting members 17Ca; and driving motors 17Cd that rotationally drive the respective screw rods 17Cc. That is, in the glass moving mechanism 17C, the respective supporting members 17Ca move along the guiding rails 17Cb in the optical axis direction, the supporting members 17Ca accompanied by the concave glass 17A and the convex glass 17B, by the respective driving motors 17Cd being driven and the respective screw rods 17Cc being rotated. Thereby, the concave glass 17A and the convex glass 17B respectively move in the optical axis direction, and the focal distances of the respective laser beams L1 and L2 of the different wavelength bands are changed. This focal distance adjusting device 17 is controlled by the control device 22. The control device 22 controls moving distances of the concave glass 17A and the convex glass 17B, that is, the focal distances, according to the numbers of rotations of the screw rods 17Cc by the driving motors 17Cd. As described above, in the laser processing apparatus 10 of this embodiment, by the focal distances of the respective laser beams L1 and L2 having the different wavelength bands being changed by the focal distance adjusting device 17, the focal point of the laser L (the laser beam L1 of the long wavelength in this embodiment) may be positioned at the position to be processed on the workpiece 8, and the positioning of the focal point at the position to be processed on the workpiece 8 is able to be performed easily.

### [Second Embodiment]

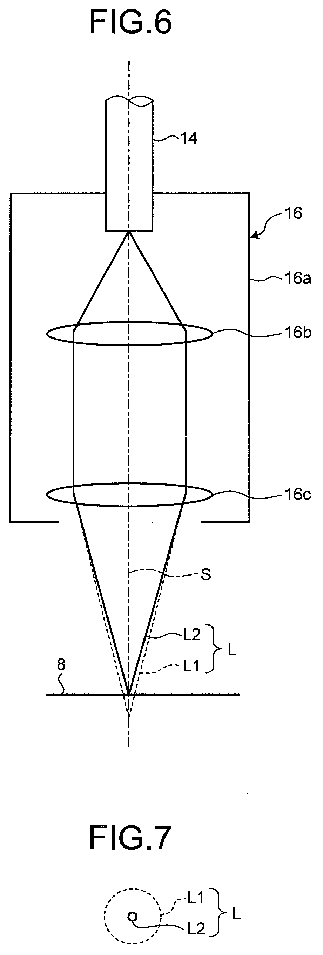

FIG. 6 is a schematic configuration diagram schematically illustrating an irradiation head of a laser processing apparatus according to this embodiment, and FIG. 7 is an enlarged plan view of laser emitted from the irradiation head illustrated in FIG. 6 to a workpiece, the laser as viewed in an optical axis direction (a direction along a direction in which the optical axis extends).

As illustrated in FIG. 6, the irradiation head 16 has, inside the casing 16a supported by the above described moving mechanism 18, the parallel optical system 16b that turns laser incoming from the guiding optical system 14 into parallel light, and the condensing optical system 16c that condenses the laser that has been turned into the parallel light by the parallel optical system 16b on the optical axis S, provided therein. The parallel optical system 16b and the condensing optical system 16c illustrated in FIG. 6 are schematically illustrated, and are not limited to this lens configuration.

In this irradiation head 16, the workpiece 8 is irradiated with the laser L that has been condensed. In this embodiment, the laser output device 12 oscillates laser beams having plural (two in FIG. 6) wavelength bands. These laser beams are turned into parallel light by the parallel optical system 16b and condensed by the condensing optical system 16c in the irradiation head 16, and laser beams L1 and L2 of the respective wavelength bands are condensed and emitted with their focal distances shifted from each other on the same optical axis S. In this embodiment, as illustrated in FIG. 6 and FIG. 7, the focal position of the laser beam L2 having the short wavelength is positioned at a position to be processed on the workpiece 8 (the surface of the workpiece 8), and the laser beam L1 having the long wavelength is condensed, with the focal point of the laser beam L2 of the short wavelength being placed in the center. That is, the focal point of the laser beam L2 of the short wavelength is positioned at the position to be processed on the workpiece 8, and the laser beam L1 of the long wavelength is condensed so as to surround the laser beam L2, with this focal point of the laser beam L2 of the short wavelength in the center.

The laser beam L2 of the short wavelength, with the focal point that has been positioned at the position to be processed on the workpiece 8, is used in processing of the workpiece 8. Further, the laser beam L1 of the long wavelength that has been condensed around the laser beam L2 of the short wavelength improves the processing quality by increasing the temperature of the metal melted by radiation from plasma generated by melting of the workpiece 8 by the laser beam L2 of the short wavelength and decreasing the viscosity.

For example, the semiconductor laser of this embodiment has wavelength bands of 808 nm and 10.6 µm. Further, if the workpiece 8 is iron or mild steel, the effect due to the laser absorptance as described in the first embodiment is small. Thus, the wavelength band of 808 nm is of the laser beam L2 of the short wavelength, the wavelength band of 10.6 µm is of the laser beam L1 of the long wavelength, the long wavelength one is condensed to the periphery, and the focal point of the short wavelength one is positioned at the position to be processed on the workpiece 8 with that focal point in the center. As a result, while the workpiece 8 is melted and processed by the laser beam L2 of the short wavelength, the temperature of the metal melted by the radiation from the plasma generated by the melting of the workpiece 8 is increased by the laser beam L1 of the long wavelength and the viscosity is decreased, thereby improving the processing quality.

As described above, the laser processing apparatus 10 of this embodiment includes the laser output device 12 that oscillates laser beams having plural wavelength bands, and the irradiation head 16 that performs irradiation by condensing the laser beams of the respective wavelength bands with their focal distances shifted from each other on the same optical axis S.

By including the laser output device 12 that oscillates the laser beams having plural wavelength bands, this laser processing apparatus 10 is able to oscillate laser beams of plural wavelength bands without increase in size of the apparatus. What is more, by the inclusion of the irradiation head 16 that performs irradiation by condensing the laser beams of the respective wavelength bands with their focal distances shifted from each other on the same optical axis S, the wavelength band with which processing is performed and the wavelength band with which the processing is assisted are able to be emitted on the same optical axis S and the processing and the processing assistance are able to be performed simultaneously in the series of processing operations. As a result, the configuration is able to be simplified even if laser beams of different wavelength bands are used.

Further, preferably in the laser processing apparatus 10 of this embodiment, the irradiation head 16 positions the focal position of the laser beam L2 of the short wavelength at the position to be processed and condenses the laser beam L1 of the long wavelength with the focal point of the laser beam L2 of the short wavelength being placed in the center.

In this laser processing apparatus 10, because, by the focal point of the laser beam L2 of the short wavelength being arranged in the condensation of the laser beam L1 of the long wavelength having the comparatively high power density, while the workpiece 8 is melted and processed by the laser beam L2 of the short wavelength, the temperature of the metal melted by the radiation from the plasma generated by the melting of the workpiece 8 is increased by the laser beam L1 of the long wavelength and the viscosity is decreased; the processing quality is able to be improved.

In the laser processing apparatus 10 of this embodiment, the irradiation head 16 is moved by the moving mechanism 18, while the position detector 34 detects the positions of the irradiation head 16 in the XYZ directions. Further, the focal position of the laser beam L1 of the long wavelength and the focal distance of the laser beam L2 of the short wavelength are determined by the parallel optical system 16b and the condensing optical system 16c, and this information of the focal distances are stored in the control device 22 in advance. Therefore, by the control device 22 moving the moving mechanism 18 to position the focal point of the laser L (the laser beam L2 of the short wavelength in this embodiment) at the position to be processed on the workpiece 8, the positioning of the focal point at the position to be processed on the workpiece 8 is able to be performed easily.

In the laser processing apparatus 10 of this embodiment, the irradiation head 16 has the focal distance adjusting device 17 (see FIG. 5). The focal distance adjusting device 17 has, for example, the concave glass 17A and the convex glass 17B, and the glass moving mechanism 17C that respectively enables movement of these concave glass 17A and convex glass 17B in the optical axis direction. The glass moving mechanism 17C includes, for example: the supporting members 17Ca that respectively support the concave glass 17A and the convex glass 17B; the guiding rails 17Cb that are provided to extend in the optical axis direction and guide the respective supporting members 17Ca to move them in the optical axis direction; the screw rods 17Cc that are provided to extend in the optical axis direction and are screwed and inserted into the respective supporting members 17Ca; and the driving motors 17Cd that rotationally drive the respective screw rods 17Cc. That is, in the glass moving mechanism 17C, the respective supporting members 17Ca move along the guiding rails 17Cb in the optical axis direction, the supporting members 17Ca accompanied by the concave glass 17A and the convex glass 17B, by the respective driving motors 17Cd being driven and the respective screw rods 17Cc being rotated. Thereby, the concave glass 17A and the convex glass 17B respectively move in the optical axis direction, and the focal distances of the respective laser beams L1 and L2 of the different wavelength bands are changed. This focal distance adjusting device 17 is controlled by the control device 22. The control device 22 controls moving distances of the concave glass 17A and the convex glass 17B, that is, the focal distances, according to the numbers of rotations of the screw rods 17Cc by the driving motors 17Cd. As described above, in the laser processing apparatus 10 of this embodiment, by the focal distances of the respective laser beams L1 and L2 having the different wavelength bands being changed by the focal distance adjusting device 17, the focal point of the laser L (the laser beam L2 of the short wavelength in this embodiment) may be positioned at the position to be processed on the workpiece 8, and the positioning of the focal point at the position to be processed on the workpiece 8 is able to be performed easily. Reference Signs List
- 8: WORKPIECE
- 10: LASER PROCESSING APPARATUS
- 12: LASER OUTPUT DEVICE
- 16: IRRADIATION HEAD
- S: OPTICAL AXIS

## Claims

1. A laser processing apparatus, comprising:
a laser output device that oscillates laser beams having plural wavelength bands; and
an irradiation head that is configured to irradiate the laser beams of the respective wavelength bands to condense at focal distances being shifted from each other on the same optical axis.

2. The laser processing apparatus according to claim 1, wherein the irradiation head positions a focal position of a laser beam having a long wavelength at a position to be processed, and condenses a laser beam having a short wavelength with a focal point of the laser beam having the long wavelength being placed in the center.

3. The laser processing apparatus according to claim 1, wherein the irradiation head positions a focal position of a laser beam having a short wavelength at a position to be processed, and condenses a laser beam having a long wavelength with a focal point of the laser beam having the short wavelength being placed in the center.

4. The laser processing apparatus according to any one of claims 1 to 3, further comprising a focal distance adjusting device including a concave glass and a convex glass that are each configured to be movable in an optical axis direction.

5. The laser processing apparatus according to any one of claims 1 to 4, further comprising:
a moving mechanism that relatively moves a supporting table, which supports a workpiece, and the irradiation head; and
a control device that adjusts the relative movement between the supporting table and the irradiation head by the moving mechanism, and various conditions of the laser beams output from the laser output device.
